# DEMANDE DE BREVET EUROPEEN

(11) **EP 0 636 452 A1**
(43) Date de publication de la demande: **01.02.1995**
(21) Numéro de dépôt: 94420215.9
(22) Date de dépôt: 26.07.1994
(51) Int. Cl.: B23Q 11/00

(54) **Système de commande de l'alimentation d'un vérin d'équilibrage d'une charge**

(30) Priorité: 26.07.1993 FR 9309466
(71) Demandeur: MORANT DEVELOPPEMENT Société à Responsabilité Limitée :, F-69200 Venissieux (FR)
(72) Inventeur: Chardenoux, Bernard Antoine, F-69009 Lyon (FR)
(74) Mandataire: Thibault, Jean-Marc

(57) **Abrégé**

- L'objet de l'invention concerne un système de commande de l'alimentation en fluide d'un vérin d'équilibrage (**4**) pour une charge, le système comportant une unité de commande (**18**) destinée à permettre d'alimenter en fluide le vérin (**4**), selon au moins deux pressions différentes correspondant chacune à un sens donné de déplacement de la tige du vérin,.
- Selon l'invention, l'unité de commande (**18**) est reliée à des moyens (**17**) de détection du sens de déplacement de la charge, destinés à être commandés par une poignée (**11**) montée en pivotement limité et assurant, à la fois, le déplacement vertical de la charge et l'actionnement des moyens de détection (**17**) lors des mouvements de montée et de descente de la charge.

## Description

La présente invention concerne le domaine technique général de la manutention d'une charge au sens général, et elle vise, plus précisément, le domaine du déplacement vertical d'une charge à l'aide d'un vérin dit d'équilibrage ou d'apesanteur.

L'invention trouve une application particulièrement avantageuse dans le domaine des appareils de manipulation de charges, installés à poste fixe le long d'une chaîne de montage ou de fabrication, notamment de véhicules.

Dans le domaine technique préféré ci-dessus, il est connu, dans l'état de la technique, d'utiliser un appareil de manutention comportant un bâti porteur qui, en général, est monté pour être suspendu et guidé en déplacement horizontal sur une voie de circulation. Un vérin d'équilibrage, en général de type pneumatique, est monté verticalement sur le bâti porteur. La tige de piston du vérin est reliée à un chariot guidé en déplacement vertical sur le bâti. Le chariot est équipé, généralement, d'un bras qui s'étend en porte-à-faux à partir du bâti, en vue de permettre le support de la charge à manipuler. Une poignée de manoeuvre est montée sur le chariot pour permettre, à un opérateur, d'assurer, à l'aide du vérin d'équilibrage, la montée ou la descente du chariot en fonction de la nature de l'opération à effectuer.

Les appareils de manutention de ce type donne satisfaction, d'une manière générale, pour l'aide qu'ils apportent à la manipulation de charges diverses. Il apparaît, toutefois, que la répétition des opérations de montée et de descente des charges conduit à une fatigue pour l'opérateur, qui est d'autant plus accrue qu'il est nécessaire d'effectuer un effort plus important pour la montée de la charge que pour la descente, dans la mesure où la pression d'alimentation du vérin ne permet pas d'obtenir la montée et la descente de la charge dans les mêmes conditions d'effort à exercer par l'opérateur.

La présente invention vise donc à remédier au problème énoncé ci-dessus en proposant un système adapté pour commander l'alimentation d'un vérin d'équilibrage, de manière que l'opérateur exerce un effort minimum aussi bien pour la montée que pour la descente des charges.

Un autre objet de l'invention est d'offrir un système de commande de l'alimentation d'un vérin d'équilibrage, conçu pour être piloté automatiquement lors du déplacement de la charge.

Pour atteindre ces objectifs, le système de commande de l'alimentation en fluide d'un vérin d'équilibrage pour une charge, comporte une unité de commande destinée à permettre d'alimenter en fluide le vérin, selon au moins deux pressions différentes correspondant chacune à un sens donné de déplacement de la tige du vérin.

Selon l'invention, l'unité de commande est reliée à des moyens de détection du sens de déplacement de la charge, destinés à être commandés par une poignée montée en pivotement limité et assurant, à la fois, le déplacement vertical de la charge et l'actionnement des moyens de détection lors des mouvements de montée et de descente de la charge.

Les moyens de détection, selon l'invention, assurent la détection d'au moins deux positions de la poignée dans lesquelles la charge est destinée à être montée ou descendue.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **Fig. 1** est une vue schématique en élévation d'un appareil de manutention équipé d'un vérin pneumatique commandé par un système conforme à l'invention.

La **Fig. 2** est une vue schématique montrant le principe de fonctionnement du système de commande selon l'invention.

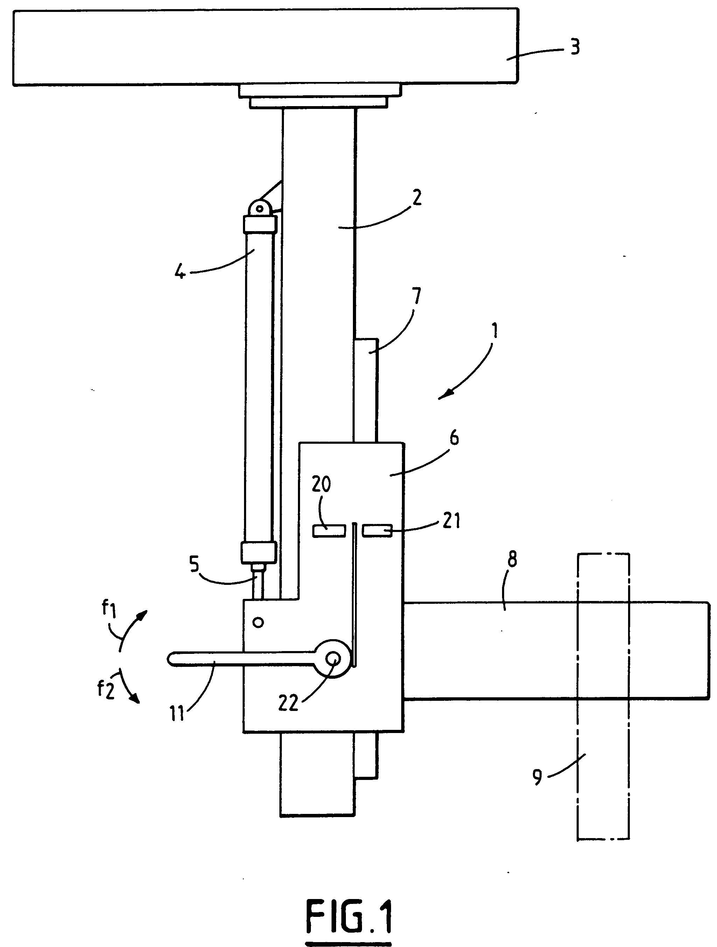

L'appareil de manutention **1**, représenté à titre d'exemple à la **Fig. 1**, comporte un bâti porteur **2** monté pour être suspendu et, de préférence, également guidé en déplacement horizontal sur une voie de guidage **3** de tous types appropriés. Sur le bâti porteur **2** est monté, selon une direction verticale, un vérin d'équilibrage **4** dont la tige de piston **5** est fixée à un chariot **6** adapté pour coulisser le long d'une glissière verticale **7** portée par le bâti **2**. Dans l'exemple illustré, le chariot **6** est pourvu d'un bras **8** s'étendant en porte-à-faux à partir du bâti **2** pour permettre le support d'une charge **9** au sens général, représentée à titre schématique. Le vérin **4** assure l'équilibrage de la charge **9** portée par le chariot **6** qui est destiné à être déplacé en coulissement vertical ascendant et descendant par l'intermédiaire d'une poignée de manoeuvre **11**.

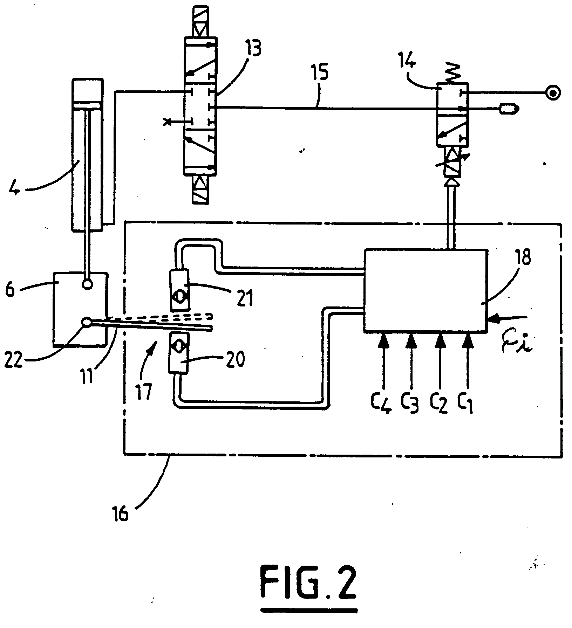

Tel que cela ressort plus précisément de la **Fig. 2**, le vérin **4** est alimenté en fluide, par exemple en air, par l'intermédiaire d'un distributeur **13**, à une valeur de pression déterminée par une électrovanne proportionnelle **14** reliée par une canalisation **15** au distributeur **13**. Conformément à l'invention, l'électrovanne proportionnelle **14** d'alimentation en fluide du vérin **4** est pilotée par un système de commande **16** comportant des moyens **17** de détection du sens de déplacement de la charge et une unité **18** de commande reliée aux moyens de détection **17** et destinée à permettre d'alimenter en fluide le vérin **4** selon au moins deux pressions différentes correspondant chacune à un sens donné de déplacement de la tige **5** du vérin.

Dans la variante de réalisation préférée illustrée, les moyens de détection **17** sont constitués par deux capteurs **20**, **21** montés de part et d'autre de la poignée de manoeuvre **11** qui est montée en pivotement limité, selon un axe **22** sensiblement horizontal. Les capteurs **20**, **21** sont ainsi montés de manière qu'en fin de course de la poignée **11**, lors du déplacement de montée et du déplacement de descente du chariot **6**, la poignée **11** actionne respectivement les capteurs **21** et **20**. Par exemple, les capteurs **20**, **21** sont du type inductif et délivrent un signal électrique dès que la poignée **11** se trouve à une distance donnée des capteurs qui est supérieure à celle déterminée lorsque la poignée **11** se trouve en butée basse et haute. Les capteurs **20** et **21** permettent donc de déterminer le sens selon lequel la charge est destinée à être déplacée et, en particulier, les deux positions de la poignée **11** dans lesquelles la charge est montée ou descendue. Bien entendu, il peut être envisagé de mettre en oeuvre d'autres types de moyens de détection. Par exemple, les moyens de détection peuvent être formés par un capteur appréciant le déplacement de la poignée **11** permettant de détecter au moins deux de ses positions pour lesquelles la charge est respectivement soulevée ou abaissée. A titre d'exemple, un tel capteur peut être un potentiomètre.

Les capteurs **20**, **21** sont reliés à l'unité de commande **18** qui sélectionne en fonction du signal délivré par le capteur **20** ou **21**, l'ordre de commande devant être appliqué à l'électrovanne proportionnelle **14**, afin que cette dernière délivre deux pressions différentes. L'unité **18** pilote l'électrovanne proportionnelle **14** de manière que lorsque le capteur **21** de détection du mouvement ascendant est activé, le vérin **4** se trouve alimenté à une pression supérieure par rapport à la pression d'alimentation appliquée lorsque le chariot **6** effectue un mouvement descendant détecté par le capteur **20**.

Le fonctionnement du système selon l'invention découle directement de la description qui précède.

Lorsque l'opérateur souhaite assurer la montée de la charge **9**, l'effort exercé sur la poignée de manoeuvre **11** pour assurer le déplacement vertical de la charge conduit à un pivotement limité de la poignée selon le sens donné par la flèche **f₁**. En position de butée de la poignée, pour laquelle le chariot peut être déplacé, le capteur **21** est actionné et délivre un signal à l'unité **18** qui permet de commander l'alimentation du vérin **4** à une pression prédéterminée, adaptée pour limiter les efforts exercés par l'opérateur pour soulever la charge. Lors de la descente du chariot **6**, l'effort exercé par l'opérateur sur la poignée **11** entraîne le pivotement limité de la poignée selon le sens de la flèche **f₂**. Le capteur **20** est activé et délivre un signal à l'unité **18** qui commande l'alimentation du vérin à une pression inférieure par rapport à celle appliquée pour un mouvement ascendant pour lequel l'effort développé est supérieur pour vaincre l'effet de gravité.

Un avantage du système selon l'invention réside dans le fait que l'opérateur exerce un effort minimum aussi bien pour le mouvement de descente que pour le mouvement de montée de la charge. De plus, la sélection de la pression d'alimentation du vérin est effectuée automatiquement à la suite du mouvement de déplacement de la charge à l'aide de la poignée **11**. L'opérateur assure ainsi, en une seule manipulation, à la fois le déplacement de la charge et la commande de l'alimentation du vérin d'équilibrage.

Dans l'exemple qui précède, la différence de pression pour les mouvements de montée et de descente du vérin est appliquée pour une seule valeur de masse de la charge **9**. Selon une autre caractéristique de l'invention, cette différence de pression est appliquée pour une série, par exemple, de quatre valeurs **C₁** à **C₄** différentes de masse pour la charge **9**. Les diverses valeurs de masses de la charge sont sélectionnées par l'opérateur et correspondent chacune à une sélection d'un couple différent de valeurs de pression d'alimentation, adaptées pour manipuler la charge en question. L'unité de commande **18** est apte à fournir, pour chacune des masses des charges sélectionnées **C₁** à **C₄**, deux valeurs de pression d'alimentation, correspondant à une valeur de pression pour le mouvement ascendant et à une valeur inférieure de pression pour le mouvement descendant. Chaque couple de pression est donc adapté à la masse de la charge à transporter et tient compte de la différence de pression à appliquer pour compenser l'effet de gravité et pour limiter l'effort exercé par l'opérateur.

Dans un exemple de réalisation, il peut être prévu que l'unité de commande **18** reçoive une valeur de masse de charge **C**_{**i**}, choisie directement par l'opérateur ou déterminée par des moyens appropriés, tels qu'un lecteur de code à barres. Par ailleurs, il est à noter que l'unité de commande **18** peut être équipée de moyens permettant de corriger les valeurs de consignes **C₁**, à **C₄** préréglées. Ces moyens de correction sont formés, par exemple, par un additionneur-soustracteur.

## Revendications

**1 -** Système de commande de l'alimentation en fluide d'un vérin d'équilibrage **(4)** pour une charge **(9)**, le système comportant une unité de commande **(18)** destinée à permettre d'alimenter en fluide le vérin **(4)**, selon au moins deux pressions différentes correspondant chacune à un sens donné de déplacement de la tige du vérin,
caractérisé en ce que l'unité de commande **(18)** est reliée à des moyens **(17)** de détection du sens de déplacement de la charge, destinés à être commandés par une poignée **(11)** montée en pivotement limité et assurant à la fois le déplacement vertical de la charge et l'actionnement des moyens de détection **(17)** lors des mouvements de montée et de descente de la charge.

**2 -** Système de commande selon la revendication 1, caractérisé en ce que les moyens de détection **(17)** assurent la détection d'au moins deux positions de la poignée dans lesquelles la charge est destinée à être montée ou descendue.

**3 -** Système de commande selon la revendication 1 ou 2, caractérisé en ce que les moyens de détection **(17)** sont constitués par deux capteurs **(20, 21)** placés de part et d'autre de la poignée **(11)**.

**4 -** Système de commande selon la revendication 1, caractérisé en ce que l'unité **(18)** commande l'alimentation en fluide du vérin **(4)** pour un mouvement de montée du vérin, à une valeur supérieure à celle appliquée lors d'un mouvement de descente du vérin.

**5 -** Système de commande selon la revendication 1, caractérisé en ce que l'unité de commande **(18)** délivre deux pressions différentes pour chacune des valeurs (**C₁**, ..., **C₄**) de masse de la charge **(9)** susceptible d'être équilibrée par le vérin.

**6 -** Appareil de manutention du type comportant :
- un bâti porteur **(2)** sur lequel est monté un vérin d'équilibrage **(4)**, dont la tige **(5)** de piston est reliée à un chariot **(6)** de support de la charge, guidé en déplacement vertical sur le bâti,
- et un système de commande de l'alimentation en fluide du vérin, comportant une unité de commande **(18)** destinée à permettre d'alimenter en fluide le vérin **(4)**, selon au moins deux pressions différentes correspondant chacune à un sens donné de déplacement de la tige du vérin,
caractérisé en ce qu'il comporte une poignée **(11)** de manoeuvre du chariot **(6)**, montée en pivotement limité et étant destinée, lors de sa manoeuvre, à actionner des moyens **(17)** de détection du sens de déplacement de la charge reliés à l'unité de commande **(18)**, permettant une alimentation différente en fluide pour le vérin, pour les mouvements de montée et de descente de la charge.
